# FASCICULE DE BREVET EUROPEEN

(11) **EP 0 558 421 B1**
(45) Date de publication et mention de la délivrance du brevet: **15.05.1996**
(21) Numéro de dépôt: 93400499.5
(22) Date de dépôt: 26.02.1993
(51) Int. Cl.: C05F 3/00, C05F 3/06, C02F 11/12, C02F 3/30

(54) **Procédé d'épuration d'excréments animaliers et son dispositif**
Verfahren und Vorrichtung zur Reinigung von tierischen Exkrementen
Process and device for the depuration of animal excrements

(30) Priorité: 28.02.1992 FR 9202333
(43) Date de publication de la demande: 01.09.1993
(73) Titulaire: BIO ARMOR, F-22940 Plaintel (FR)
(72) Inventeur: Colas, Gérard, F-22400 Maroue (FR); Guillemot, Louis, F-22800 Le Foeil (FR)
(74) Mandataire: Serin, Jean-Pierre

(56) Documents cités:
- EP-A- 0 005 113
- WO-A-91/11393
- DATABASE WPIL Section Ch, Week 8920, Derwent Publications Ltd., London, GB; Class D04, AN 89-147350
- PATENT ABSTRACTS OF JAPAN vol. 14, no. 118 (C-697)6 Mars 1990

## Description

La présente invention se rapporte à un procédé d'épuration d'excréments animaliers et à son dispositif, notamment à un procédé d'épuration de lisier de porcs.

Les élevages animaliers posent, entre autres problèmes, celui de la transformation des excréments des animaux. Ce problème est bien connu: les excréments sont malodorants et chargés principalement de matières nitrées qui sont un important facteur de pollution lorsqu'ils sont rejetés directement dans la nature en quantités industrielles, aussi bien dans l'air par les dégagements gazeux très importants d'ammoniac, que dans le sol pour la partie liquide ou soluble.

Lorsque la quantité des excréments est faible on sait transformer cette matière par réaction bactériologique anaérobique dans des citernes fermées, comme on le fait par exemple très couramment dans les habitations domestiques.

Mais le principe de fonctionnement de ces fosses n'est pas ou très difficilement adaptable à la production de matière d'un élevage animalier, production dix à cent fois supérieure ou plus.

Une des solutions parmi les plus simples a été d'évacuer directement et simplement ces déchets sans chercher à les transformer. On les recueille dans un réservoir pour les épandre sur les champs, de préférence sur ceux qui sont cultivés afin d'utiliser directement la partie fertilisante qu'ils contiennent, comme engrais. Cependant cet épandage, outre la nuisance considérable qu'il provoque par l'odeur caractéristique des matières fécales, apporte au sol une quantité de matières, notamment nitrées, à absorber très supérieure à sa capacité d'absorption et de dégradation naturelles, d'où une pollution très importante des sols qui se constate par une très forte teneur en nitrates des nappes phréatiques.

Pour éviter cet épandage on a réalisé des procédés de traitement de ces lisiers.

L'un de ces procédés consiste à le brûler. Cependant ce procédé est coûteux car il suppose un séchage préalable sans dégagement d'ammoniac puis une installation d'incinération.

Un autre procédé consiste en une dégradation bactérienne des matières nitrées. Schématiquement le lisier est passé dans un crible puis centrifugé en présence de polymères; les matières lourdes et solides sont séparées pendant que la fraction restante, la plus importante en volume et en produits nitrés subit, en présence de bactéries, une double réaction chimique (oxydation - réduction) pendant lesquelles l'azote, présente (sous forme ammoniacale, nitrique, ou organique) est libérée sous forme gazeuse, opération encore appelée nitrification-dénitrification.

Cependant ces procédés ne filtrent pas les métaux lourds ni la "DCO" dure (demande chimique en oxygène) c'est à dire la partie des molécules qui sont très difficiles à dégrader (non dégradées après onze jours de séjour dans les bassins de traitement). Ces éléments se retrouvent présents dans l'effluent final ce qui interdit tout rejet en rivière.

En outre ce procédé implique des investissements proportionnellement très lourds et ne peut être économiquement viable que pour des élevages très importants en nombre, par exemple de 100.000 porcs produits par an le volume annuel traité étant de l'ordre de 100.000 mètres cubes.

L'état de la technique comprend encore le brevet JP 1090098. Il s'agit d'un procédé permettant la séparation des éléments phosphorés présents dans une boue activée issue d'effluents chargés en phosphore et en azote; il n'apporte aucune indication sur l'épuration du liquide autre que le fait qu'elle consiste en une opération de nitrification-dénitrification biologique.

L'invention a pour objectif de réaliser un procédé peu coûteux, permettant de réaliser des installations de petits volumes pour élevages d'au moins 3000 porcs produits par an, et simple et robuste afin de pouvoir être mis en oeuvre et entretenu par l'éleveur lui-même sans utilisation de connaissances techniques approfondies.

Un second objectif est la réalisation d'un procédé du type à dégradation bactérienne connu permettant d'obtenir en sortie, d'une part un effluent épuré: sensiblement sans charge minérale, pratiquement exempt de bactéries, et dont la teneur en matière organique est très faible, et utilisable directement en irrigation ou même rejetable en rivière après traitement tertiaire, d'autre part un produit organique compostable.

On connaît un brevet EP-A-5113 qui décrit une installation adaptée pour le traitement des petits volumes de lisier. Cependant cette installation ne vise pas l'épuration mais la désodorisation de la masse liquide. Le problème est la suppression des odeurs et la séparation des phases liquide-solide. Les odeurs sont supprimées par une simple aération forcée du liquide. Le liquide ne subit qu'une seule aération ne peut donc être que partiellement épuré : il ne résout pas le problème de la présente demande. En outre le procédé prévoit une étape d'évaporation importante (40% du liquide), ce qui suppose des moyens de chauffe coûteux ou un fonctionnement variable selon les saisons.

Si la séparation de phases prévue dans ce brevet est peu coûteuse par l'emploi du carbonate de calcium, elle présente cependant deux inconvénients :
- la floculation est lente (au moins quatre jours) et à l'air libre; d'où un important dégagement d'odeurs;
- le volume considérable de CaCO₃ utilisé (100kg/12m³) suppose un approvisionnement régulier ou un important stockage.

L'invention a pour objet un procédé d'épuration en continu d'excréments animaliers dans lequel on recueille la matière en totalité, on la tamise pour en extraire les matières sèches, on lui fait subir, en présence de chaux, un traitement de séparation par floculation et sédimentation qui détermine deux fractions et l'on fait subir à la fraction la plus légère une épuration biologique avec des boues bactériennes, ladite épuration comportant une succession continue de phases d'aération et d'anoxie avec recyclage, le liquide épuré étant évacué après clarification, caractérisé en ce que :
- le surnageant de la cuve de séparation est amené par gravité en continu dans une cuve de dégradation où la dégradation des matières organiques azotées est réalisée en anoxie : le liquide repose sans agitation pendant un certain temps dans cette cuve d'où il est conduit en continu vers un bassin d'aération,
- le liquide est alors soumis à une aération, l'air étant introduit en quantité déterminée, notamment par des injecteurs,
- il est ensuite repris par une pompe qui le recycle dans la cuve de dégradation,
- le trop plein du bassin d'aération est déversé en continu dans une cuve de clarification où le liquide décante lentement : les sédiments, essentiellement des boues biologiques, sont reconduits en continu en partie en bassin d'aération et le surplus de la cuve de mélange, et le liquide épuré surnageant est évacué de la cuve par débordement et conduit dans un réservoir.

L'invention est encore remarquable en ce que le recyclage entre les zones d'épuration en anoxie et aérée est réalisé dans deux cuves de dégradation, chacune associée à un bassin d'aération, le liquide étant recyclé du premier bassin d'aération dans la seconde cuve, et du second bassin d'aération dans la première cuve, le trop plein du ou des bassins étant déversé dans la cuve de clarification.

L'invention porte encore sur le dispositif d'épuration d'excréments animaliers pour la réalisation du procédé selon l'invention, comportant une cuve de mélange pour la floculation, une cuve de sédimentation pour la séparation des boues floculées, caractérisé en ce qu'il comporte :
- au moins une cuve de dégradation pour la dénitrification en phase d'anoxie de la matière organique contenue dans le liquide, associée à au moins un bassin d'aération pour la minéralisation et la nitrification de ladite matière organique, et une conduite de recyclage du bassin dans la cuve de dégradation,
- et une cuve de clarification du liquide dans laquelle les boues biologiques sont décantées, l'effluent épuré étant évacué dans un réservoir.

Le dispositif est encore remarquable par les caractéristiques suivantes:
- la cuve de mélange comporte en partie basse une conduite de sortie communicant en continu par gravité avec la cuve de séparation, et en ce que la cuve de séparation, ou réacteur physico-chimique, comporte en partie supérieure, au moins une sortie par trop plein laquelle alimente par gravité au moins une cuve de dégradation, et en partie basse une conduite d'évacuation des boues vers une unité de stockage,
- il comporte au moins deux cuves de dégradation, chacune associée à un bassin d'aération, chaque bassin d'aération comportant une conduite de recyclage dans la cuve de dégradation voisine,
- chaque cuve de dégradation comporte en partie inférieure une sortie alimentant par gravité le bassin d'aération associé,
- on prévoit sur la ou les conduites de recyclage une pompe à air comprimé qui produit avec le liquide une émulsion,
- la cuve de clarification comporte une pluralité de fentes périphériques supérieures assurant l'entrée du liquide par débordement depuis le ou les bassins d'aération, en partie inférieure une sortie d'évacuation et recyclage des boues biologiques décantées, et supérieurement sous le niveau des fentes au moins une goulotte d'évacuation de l'effluent épuré.

Le procédé et son dispositif permettent d'obtenir des résultats particulièrement intéressants:
- l'effluent épuré est utilisable en irrigation: le poids en éléments minéraux est extrêmement faible: pour un litre au plus de 50 mg d'azote sous forme de nitrates, moins de 2 mg d'azote sous forme de nitrite, et moins de 10 mg sous forme ammoniacale;
   . le taux de présence de métaux lourds et de phosphore est très faible, par exemple de l'ordre de 5 mg/l pour le phosphore;
   . il contient une quantité résiduaire très faible de bactéries pathogènes (50 pour une quantité initiale de 500.000 à 800.000);
      Ainsi il ne reste plus, pour obtenir un effluent rejetable en rivière, qu'à éliminer la matière organique qui constitue la DCO dure, ce qui peut être réalisé par exemple, par traitement par osmose inverse ou tout autre traitement connu.
- l'épuration se produit pratiquement sans aucun dégagement d'ammoniac (la teneur en ammoniaque dans les bassins d'aération est de l'ordre de 1 mg/litre).
- le traitement est peu coûteux: les matières premières utilisées pour la floculation sont la chaux celle-ci pouvant même être supprimée et l'eau qui provient de l'épuration elle-même. En dehors de l'investissement de départ les coûts sont réduits à la consommation d'énergie des pompes,la circulation globale du liquide se faisant par gravité;
- en outre, les boues extraites peuvent être déshydratées par tout moyen connu, compostées et utilisées comme fertilisants.

Comme on le voit ce procédé permet d'exploiter un élevage animalier, notamment un élevage de porcs, en éliminant totalement le problème des excréments et en outre les installations peuvent être de petite taille pour des élevages d'au moins 3000 porcs produits par an.

Afin de mieux comprendre l'invention on a illustré sur le dessin annexé un exemple de réalisation non limitatif décrit ci après; sur ce dessin:
- la figure 1 représente un schéma de principe du procédé selon l'invention,
- la figure 2 est une vue de dessus d'une installation d'épuration selon l'invention.

Cet exemple se rapporte au traitement d'épuration du lisier de porcs mais n'est pas limitatif et l'homme du métier comprendra aisément qu'il peut s'appliquer à tous autres types d'excréments.

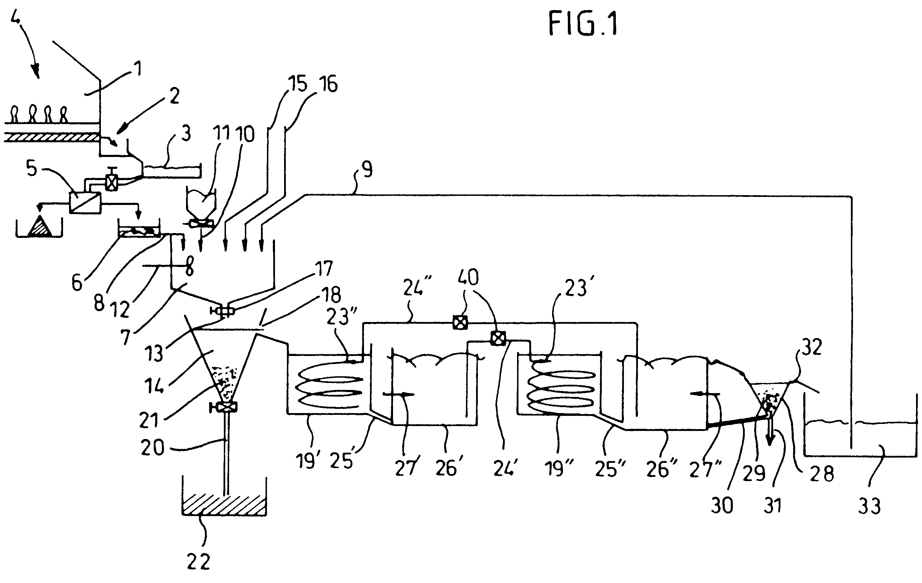

Sur la figure 1 la référence 1 désigne la station d'élevage; le lisier est évacué de manière connue et recueilli dans un réservoir 2, appelé encore poste de relèvement.

Ce poste de relèvement est associé à un réservoir tampon 3 qui a pour fonction d'assurer en aval une alimentation de l'installation en continu ou par charges à un rythme déterminé.

En outre, et de manière connue le lisier est dilué. Cette dilution 4 est réalisée dès la station d'élevage 1, l'eau ayant essentiellement la fonction de lavage de la station et d'évacuation du lisier; en second lieu elle permet de diminuer les dégagements d'ammoniac.

Le lisier brut est tamisé par tout moyen connu, par exemple un tamis 5 rotatif à mailles d'environ 500 micromètres. Il a pour effet d'éliminer les matières sèches non polluantes, les pailles, débris divers, les sables, etc qui peuvent représenter plus de 10% de la matière sèche du lisier brut.

Le lisier tamisé est déversé directement 8 en continu ou par charges successives à partir d'un volume tampon 6 dans une cuve de mélange 7. Celle-ci comporte, outre l'alimentation 8 en produits de déjection animale, une conduite 9 d'alimentation en eau, et une arrivée 10 de chaux 11 sous forme de lait de chaux, au moins un agitateur mélangeur 12 et en partie basse une conduite de sortie 13 communiquant de préférence en continu par gravité avec une cuve de séparation 14 ou réacteur physico-chimique.

La cuve de mélange comporte éventuellement en outre une alimentation 15 en boues biologiques et une alimentation 16 en polymères.

L'introduction de chaux est asservie à l'alimentation de lisier de sorte que la quantité de chaux introduite soit en proportion constante dans la cuve, que cette alimentation soit continue ou discontinue.

La chaux est un floculant qui, selon l'invention, a pour fonctions particulières essentielles:
- de tuer les bactéries pathogènes,
- de bloquer la DCO "dure" ,
- de retenir les métaux lourds comme le cuivre par exemple, en créant des liaisons avec la partie solide,
- de retenir le phosphore en créant des liaisons avec la partie solide.

Dans l'exemple la cuve est cloisonnée en trois compartiments: le premier dans lequel la chaux , l'eau et le lisier sont mélangés, le deuxième dans lequel on introduit les boues biologiques, le troisième dans lequel on introduit les polymères.

Les polymères utilisés sont connus en soit et utilisés en raison de la longueur de leur structure moléculaire qui forme des réseaux dans lesquels sont retenus les colloïdes. On choisit de préférence des polymères fortement cationiques ou neutres. Selon l'invention ils ne sont utilisés que comme complément éventuel dans la réaction de coagulation.

La quantité de chaux varie selon la qualité du lisier, c'est à dire notamment selon les conditions d'alimentation, climatiques, et géographiques de l'élevage. L'expérience montre que la quantité de chaux utilisée est située entre 150 g et 200 g pour 1 Kg de matière sèche, soit pour un lisier étendu à 5% de matière sèche, entre 7,5 kg et 10 kg de chaux par m³.

Mais on a montré également que la chaux n'est pas l'élément essentiel : en effet, en variante, elle peut être totalement supprimée du dispositif sans modification sensible du résultat sur l'épuration de l'effluent final. C'est le cas notamment lorsque la floculation est réalisée en amont de l'installation, directement au niveau de l'élevage; dans ce cas, l'installation ne comporte pas de zone de fractionnement.

C'est encore le cas lorsque l'on ne veut pas faire de fractionnement, le lisier est alors directement amené dans la zone d'épuration. L'épuration est modifiée en ce sens qu'elle utilise une plus grande quantité d'oxygène, et les boues obtenues dans le bassin de décantation étant plus importantes.

La cuve de mélange se déverse selon un débit prédéterminé et contrôlable par une vanne 17 dans le réacteur physico-chimique 14 lequel comporte en partie supérieure, au moins une sortie par trop plein 18 laquelle alimente par gravité la zone d'épuration et en partie basse une conduite 20 d'évacuation des sédiments.

Dans ce réacteur les matières colloïdales, les bactéries pathogènes, les métaux lourds et l'essentiel du phosphore sont précipités et sédimentent en produisant des boues physico-chimiques 21. Les boues sont évacuées par pompage et stockées dans un silo 22 avant d'être déshydratées et compostées de manière connu en soi.

La zone d'épuration comporte deux ensembles d'épuration montés en circuit fermé, chacun comprenant une cuve de dégradation en anoxie 19', 19'' en communication avec un bassin d'aération respectivement 26', 26'', eux-mêmes en communication avec la cuve suivante, respectivement 19'', 19'. Les cuves et bassins sont cylindriques, cylindro-côniques et ou inscrites dans un ensemble cylindriques, et l'arrivée 23', 23'' des conduites de recyclage 24', 24'' est de préférence tangentielle de manière à créer un mouvement tournant. Le liquide descend lentement et s'échappe par une conduite 25', 25'' débouchant à la partie inférieure de la cuve et qui communique avec le bassin 26', 26''. Les conduites sont munies d'une vanne non représentée permettant le réglage, voire l'arrêt des débits, cependant en pratique elles restent toujours ouvertes car la circulation est continue entre les cuves et les bassins.

Le liquide est d'abord introduit dans la cuve de dégradation et non premièrement dans le bassin d'aération afin d'éviter de manière connue les dégagements de gaz ammoniacal dans l'atmosphère. L'ammoniac en solution aqueuse, est immédiatement entraînée dans le courant tournant descendant et n'a pas la possibilité de s'échapper.

Le bassin comporte des moyens d'aération 27', 27'' connus en soi, du type injecteurs ou autre, dont le fonctionnement est commandé par une centrale de contrôle comme cela est habituel dans les stations d'épuration: l'apport d'oxygène peut être discontinu ou continu selon la quantité d'oxygène demandée. Au cours de cette phase d'aération, la matière organique est minéralisée. L'azote présent sous diverses formes (ammoniacale, nitrique, organique) est oxydé en nitrites puis en nitrates : c'est la nitrification.

Selon l'invention le liquide est repris d'un bassin d'aération 26' ou 26'' par une pompe à air comprimé du type connu et mise dans le commerce sous le nom "Mammouth", et conduit dans la cuve de dégradation suivante 19'' ou 19' sous forme d'une émulsion. Dans les cuves, l'épuration a lieu en anoxie: c'est la dénitrification. Cette phase permet la réduction des nitrates en nitrites puis en azote moléculaire qui se dégage dans l'atmosphère.

Le liquide épuré est recueilli par débordement continu des bassins d'aération 26', 26'' et est conduit par gravité dans une cuve 28 de clarification. Les boues biologiques 29 sont décantées et recyclées 30 dans la zone aérée. En outre, afin de contrôler la population bactérienne dans l'installation on prévoit, en sortie de la cuve de clarification, une conduite 31 d'évacuation des boues biologiques; celles-ci sont réintroduites 15 dans la cuve de mélange et sont évacuées avec les boues physico-chimiques. L'effluent final est repris par débordement, en continu, dans des goulottes de sortie 32 et est stocké dans un réservoir 33 d'où il est recyclé d'une part dans les bâtiments d'élevage, d'autre part (9) dans la cuve de mélange.

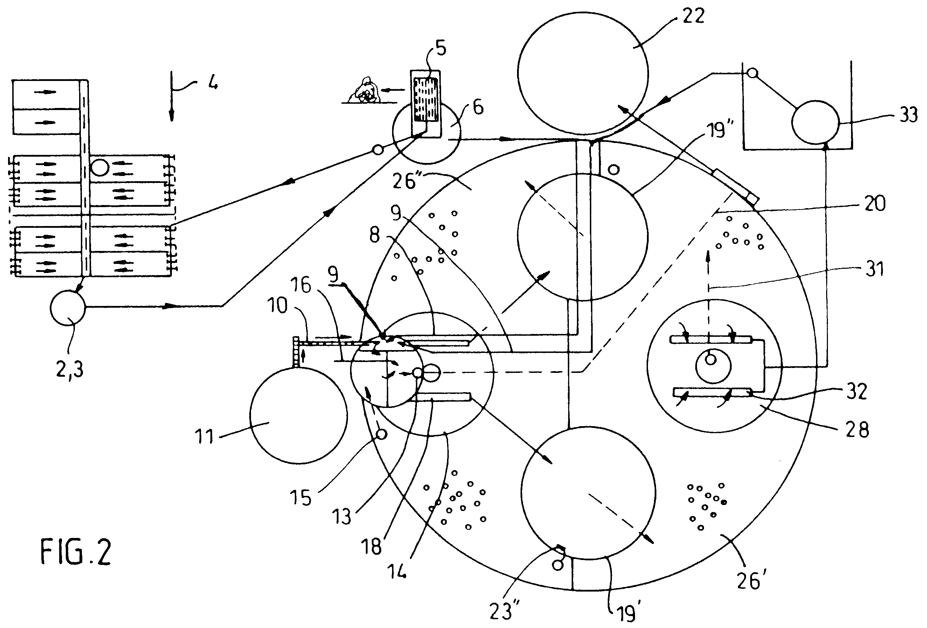

Dans l'exemple d'installation de traitement de la figure 2, l'épuration est réalisée dans un ouvrage unique comprenant plusieurs sections ou compartiments. Dans un cylindre 34 de grande taille on dispose, réparties sur la périphérie, la cuve de séparation 14, deux cuves de dégradation 19', 19'' approximativement diamétralement opposées et la cuve de clarification 28. Une cloison 35 sensiblement diamétrale relie les cuves de dégradation et se prolonge jusqu'aux parois du cylindre et détermine, dans le volume restant entre les cuves les deux bassins d'aération 26', 27''. La cuve de mélange 7 est au dessus de la cuve de séparation et le silo de chaux 11 accolé au cylindre.

La présente description repose sur le traitement des rejets d'un élevage de porcs. Cette application n'est pas limitative et l'invention s'étend et s'applique à tous élevages animaliers sans exception aux adaptations près.

D'une manière plus générale encore l'invention s'applique à l'épuration de tous les effluents contenant des matières organiques azotées qu'elle soient issues du monde animal ou non.

## Revendications

1. Procédé d'épuration en continu d'excréments animaliers dans lequel on recueille la matière en totalité, on la tamise pour en extraire les matières sèches, on lui fait subir, en présence de chaux, un traitement de séparation par floculation et sédimentation dans une cuve de mélange (7) et une cuve de séparation (14) qui détermine deux fractions et l'on fait subir à la fraction la plus légère une épuration biologique avec des boues bactériennes, ladite épuration comportant une succession continue de phases d'aération et d'anoxie avec recyclage, le liquide épuré étant évacué après clarification, comprenant les étapes suivantes :
- le surnageant de la cuve de séparation (14) est amené par gravité en continu dans une cuve de dégradation (19') où la dégradation des matières organiques azotées est réalisée en anoxie : le liquide repose sans agitation pendant un certain temps dans cette cuve d'où il est conduit en continu vers un bassin d'aération (26'),
- le liquide est alors soumis à une aération, l'air étant introduit en quantité déterminée, notamment par des injecteurs (27'),
- il est ensuite repris par une pompe (40) qui le recycle dans la cuve de dégradation (19'),
- le trop plein du bassin d'aération (26') est déversé en continu dans une cuve de clarification (28) où le liquide décante lentement : les sédiments, essentiellement des boues biologiques (29), sont reconduits en continu en partie en bassin d'aération (26') et le surplus dans la cuve de mélange (7), et le liquide épuré surnageant est évacué de la cuve (28)par débordement et conduit dans un réservoir (33).

2. Procédé selon la revendication 1 caractérisé en ce que le recyclage entre les zones d'épuration en anoxie et aérée est réalisé dans deux cuves de dégradation (19', 19''), chacune associée à un bassin d'aération (26', 26''), le liquide étant recyclé du premier bassin d'aération (26') dans la seconde cuve (19''), et du second bassin d'aération (26'') dans la première cuve (19'), le trop plein du ou des bassins étant déversé dans la cuve de clarification (28).

3. Dispositif d'épuration d'excréments animaliers pour la réalisation du procédé selon la revendication 1, comportant une cuve de mélange (7) pour la floculation, une cuve de sédimentation (14) pour la séparation des bornes floculées, caractérisé en ce qu'il comporte :
- au moins une cuve de dégradation (19') pour la dénitrification en phase d'anoxie de la matière organique contenue dans le liquide, associée à au moins un bassin d'aération (26') pour la minéralisation et la nitrification de ladite matière organique, et une conduite de recyclage (24') du bassin (26') dans la cuve de dégradation (19'),
- et une cuve de clarification (28) du liquide dans laquelle les bornes biologiques sont décantées, l'effluent épuré étant évacué dans un réservoir (33).

4. Dispositif d'épuration d'excréments animaliers selon la revendication 3 caractérisé en ce que la cuve de mélange (7) comporte en partie basse une conduite de sortie (13) communiquant en continu par gravité avec la cuve de séparation (14), et en ce que la cuve de séparation (14), ou réacteur physico-chimique, comporte en partie supérieure, au moins une sortie par trop plein laquelle alimente par gravité au moins une cuve de dégradation (19', 19''), et en partie basse une conduite d'évacuation des bornes vers une unité de stockage (22).

5. Dispositif d'épuration d'excréments animaliers selon la revendication 3 caractérisé en ce qu'il comporte au moins deux cuves de dégradation (19', 19''), chacune associée à un bassin d'aération (26', 26''), chaque bassin d'aération (26', 26'') comportant une conduite de retour (24', 24'') dans la cuve de dégradation voisine.

6. Dispositif d'épuration d'excréments animaliers selon la revendication 5 caractérisé en ce que chaque cuve de dégradation (19', 19'') comporte en partie inférieure une sortie alimentant par gravité le bassin d'aération associé.

7. Dispositif d'épuration d'excréments animaliers selon la revendication 3 caractérisé en ce qu'on prévoit sur la ou les conduites de recyclage (24', 24'') une pompe à air comprimé qui produit avec le liquide une émulsion.

8. Dispositif d'épuration d'excréments animaliers selon la revendication 3 caractérisé en ce que la cuve de clarification (28) comporte une pluralité de fentes périphériques supérieures assurant l'entrée du liquide par débordement depuis le ou les bassins d'aération (26', 26''), en partie inférieure une sortie d'évacuation et recyclage (31) des boues biologiques décantées, et supérieurement sous le niveau des fentes au moins une goulotte d'évacuation (32) de l'effluent épuré.

## Claims

1. Method for continuous purification of animal excrements whereby the all the matter is gathered together, sieved in order to extract the dry matter therefrom, subjected in the presence of lime to a separation processing by flocculation and sedimentation, in a conditioner (7) and a separation tank (14), which determines two fractions, the lighter fraction being subjected to biological purification with bacterial mud, said purification comprising a continuous succession of airing and anoxia with recycling, the purified liquid being evacuated after clarification, consisting in the following stages:
- the supernatant from the separation tank (14) is continuously drawn by gravity into a degradation tank (19') in which the nitrogenous organic substances are degraded by anoxia: the liquid is left to stand without stirring for a certain period of time in this tank from which it is continuously led to an aeration tank (26');
- the liquid is then subjected to aeration, the air being introduced in predetermined quantity, notably by means of injectors (27');
- it is then worked by a pump (40) which recycles it back to the degradation tank (19');
- the overflow from the aeration tank (26') is continuously diverted into a clarification tank (28) where the liquid is slowly decanted: the sediments, which are mainly biological mud (29), are partially and continuously fed back into the aeration tank (26') with the surplus being fed into the conditioner (7), and the supernatant purified liquid is evacuated from the tank (28) by overflowing and led into a reservoir (33).

2. Method according to claim 1, characterized in that the recycling between the anoxia purification and aerated zones is performed in two degradation tanks (19', 19''), each associated with an aeration tank (26', 26''), the liquid being recycled from the first aeration tank (26') into the second tank (19''), and from the second aeration tank (26'') into the first tank (19'), the overflow from the tank(s) being diverted into the clarification tank (28).

3. Animal excrement purification device to implement the method as claimed in claim 1, comprising a conditioner (7) for flocculation, a sedimentation tank (14) to separate the flocculated mud, characterized in that it comprises:
- at least one degradation tank (19') for denitrifying the organic matter contained in the liquid during the anoxia phase, associated with at least one aeration tank (26') for the mineralizing and nitrifying of said organic matter, and a pipe (24') for recycling from the tank (26') to the degradation tank (19');
- and a clarification tank (28) for the liquid in which the biological mud is decanted, the purified effluent being evacuated into a reservoir (33).

4. Animal excrement purification device as claimed in claim 3, characterized in that the conditioner (7) comprises, in its lower part, an outlet pipe (13) communicating continuously with the separation tank (14) by gravity, and in that the separation tank (14) or physico-chemical reaction vessel comprises, in its upper part, at least one overflow outlet supplying, by gravity, at least one degradation tank (19', 19''), and, in its lower part, a pipe evacuating the mud to a storage unit (22).

5. Animal excrement purification device as claimed in claim 3, characterized in that it comprises at least two degradation tanks (19', 19'') each associated with an aeration tank (26', 26''), each aeration tank (26', 26'') comprising a return pipe (24', 24'') feeding into the adjoining degradation tank.

6. Animal excrement purification device as claimed in claim 5, characterized in that each degradation tank (19', 19'') comprises, in its lower part, an outlet supplying the associated aeration tank by gravity.

7. Animal excrement purification device as claimed in claim 3, characterized in that there is provided, on said recycling pipe(s) (24', 24''), a compressed air pump which produces an emulsion with the liquid.

8. Animal excrement purification device as claimed in claim 3, characterized in that the clarification tank (28) comprises plural upper peripheral slots enabling the liquid to enter by overflowing from the aeration tank(s) (26', 26''), in its lower part an evacuation and recycling outlet (31) for the decanted biological mud, and above that but below the level of the slots, at least one evacuation chute (32) for the purified effluent.

## Patentansprüche

1. Kontinuierliches Tierexkremente-Reinigungsverfahren, bei dem die gesamte Masse erfaßt und aus ihr die Trockenmasse ausgesiebt wird, und bei dem diese unter Beigabe von Kalk in einer Mischwanne (7) und einer Trennwanne (14) einer Trennbehandlung durch Flockung und Ablagerung unterzogen wird, wobei sich zwei Anteile ergeben und der leichtere Anteil einer biologischen Reinigung mit Bakterienschlämmen unterzogen wird, die eine kontinuierliche Folge von Belüftungs- und Anoxiephasen mit Rückführung umfaßt, wobei die gereinigte Flüssigkeit nach der Klarung entleert wird, wobei das Verfahren die nachfolgende Verfahrenschritten umfaßt :
- der aufschwimmende Teil des Trennwanneninhalts (14) wird kontinuierlich durch Schwerkrafteinwirkung in einen Abbaubehälter (19') überführt, wo der Abbau der stickstoffhaltigen organischen Masse unter Anoxie erfolgt: die Flüssigkeit ruht eine gewisse Zeit bewegungslos in diesem Behälter, von wo sie kontinuierlich in ein Belüftungsbecken (26') überführt wird,
- die Flüssigkeit wird dann einer Belüftung unterzogen, wobei besonders durch Injektoren (27') eine bestimmte Menge Luft zugeführt wird,
- danach wird sie durch eine Pumpe (40) in den Abbaubehälter (19') zurückgeführt,
- der Überschuß des Belüftungsbeckens (26') läuft kontinuierlich in eine Klärwanne (28) ab, wo die Flüssigkeit langsam dekantiert: die Ablagerungen, im wesentlichen biologische Schlämme (29), werden kontinuierlich zum Teil in das Belüftungsbecken (26') und der Überschuß in die Mischwanne (7) überführt, und die gereinigte, aufschwimmende Flüssigkeit wird aus der Wanne (28) durch Überlaufen entleert und in einen Speicher (33) überführt.

2. Verfahren nach Anspruch 1, dadurch gekennzeichnet, daß die Hin- und Herführung zwischen den Anoxie- und den belüfteten Reinigungsbereichen über zwei Abbaubehälter (19', 19'') erfolgt, die mit je einem Belüftungsbecken (26', 26'') verbunden sind, wobei die Flüssigkeit vom ersten Belüftungsbecken (26') in den zweiten Behälter (19'') und vom zweiten Belüftungsbecken (26') in den ersten Behälter (19') rückgeführt wird, wobei der Überschüß des bzw. der Becken in die Klärwanne (28) abfließt.

3. Tierexkremente-Reinigungseinrichtung zur Ausführung des Verfahrens nach Anspruch 1, mit einer Mischwanne (7) zur Flockung und einer Ablagerungswanne (14) zur Trennung der geflockten Schlämme, dadurch gekennzeichnet, daß sie
- mindestens einen Abbaubehälter (19') zur Denitrifikation der in der Flüssigkeit enthaltenen organischen Masse unter Anoxie, verbunden mit mindestens einem Belüftungsbecken (26') zur Mineralisierung und Nitrifikation der genannten organischen Masse, und eine Rückführleitung (24') des Beckens (26') in den Abbaubehälter (19'),
- eine Klärwanne (28) für die Flüssigkeit, worin die biologischen Schlämme dekantieren, wobei die gereinigte Flüssigkeit in ein Reservoir (33) entleert wird, aufweißt.

4. Tierexkremente-Reinigungseinrichtung nach Anspruch 3, dadurch gekennzeichnet, daß die Mischwanne (7) in ihrem unteren Teil eine Auslaßleitung (13) aufweißt, die kontinuierlich durch Schwerkrafteinwirkung mit der Trennwanne (14) in Verbindung steht, und daß die Trennwanne (14) bzw. der physikalisch-chemische Reaktor an seinem oberen Teil mindestens einen überflußauslaß, der durch Schwerkrafteinwirkung mindestens einen Abbaubehälter (19', 19'') speist, und an seinem unteren Teil eine Schlammauslaßleitung aufweißt, die zu einer Lagerungseinrichtung (22) führt.

5. Tierexkremente-Reinigungseinrichtung nach Anspruch 3, dadurch gekennzeichnet, daß sie mindestens zwei Abbaubehälter (19', 19'') aufweißt, die mit je einem Belüftungsbecken (26', 26'') verbunden sind, wobei jedes Belüftungsbecken (26', 26'') eine Rücklaufleitung (24', 24'') aufweißt, die zu dem benachbarten Abbaubehälter führt.

6. Tierexkremente-Reinigungseinrichtung nach Anspruch 5, dadurch gekennzeichnet, daß jeder Abbaubehälter (19', 19'') an seinem unteren Teil einen Auslaß aufweißt, der durch Schwerkrafteinwirkung das dazugehörige Belüftungsbecken speist.

7. Tierexkremente-Reinigungseinrichtung nach Anspruch 3, dadurch gekennzeichnet, daß in der Rückführleitung bzw. den Rückführleitungen (24', 24'') eine Druckluftpumpe vorgesehen ist, die aus der Flüssigkeit eine Emulsion herstellt.

8. Tierexkremente-Reinigungseinrichtung nach Anspruch 3, dadurch gekennzeichnet, daß die Klärwanne (28) eine Vielzahl von umlaufenden, obenliegenden Schlitze aufweißt, die den Eintritt der Flüssigkeit durch Überlaufen aus dem bzw. den Belüftungsbecken (26', 26'') sicherstellt, sowie im unteren Teil einen Entleerungs- und Rückführungsauslaß (31) für die dekantierten biologischen Schlämme und oberhalb unter der Schlitzhöhe mindestens eine Entleerungsrinne (32) für die gereinigte Flüssigkeit.
